# EUROPÄISCHE PATENTSCHRIFT

(11) **EP 1 456 321 B1**
(45) Veröffentlichungstag und Bekanntmachung des Hinweises auf die Patenterteilung: **18.04.2007**
(21) Anmeldenummer: 02795189.6
(22) Anmeldetag: 13.12.2002
(51) Int. Cl.: C09J 201/00, C09J 163/00

(54) **MEHRPHASIGE STRUKTURKLEBSTOFFE**
MULTI-PHASE STRUCTURAL ADHESIVES
ADHESIFS A PHASES MULTIPLES POUR STRUCTURES

(30) Priorität: 22.12.2001 DE 10163859
(43) Veröffentlichungstag der Anmeldung: 15.09.2004
(73) Patentinhaber: Henkel Kommanditgesellschaft auf Aktien, 40589 Düsseldorf (DE)
(72) Erfinder: SCHÖNFELD, Rainer, 40221 Düsseldorf (DE); SCHENKEL, Hubert, 69207 Sandhausen (DE)
(86) Internationale Anmeldenummer: PCT/EP2002/014224
(87) Internationale Veröffentlichungsnummer: WO 2003/055957

(56) Entgegenhaltungen:
- DE-A- 10 017 783
- PATENT ABSTRACTS OF JAPAN vol. 1996, no. 08, 30. August 1996 (1996-08-30) & JP 08 109362 A (NISSAN MOTOR CO LTD), 30. April 1996 (1996-04-30)
- DATABASE WPI Section Ch, Week 199542 Derwent Publications Ltd., London, GB; Class A21, AN 1995-325589 XP002238411 & JP 07 224144 A (NIPPON ZEON KK), 22. August 1995 (1995-08-22)

## Beschreibung

Die vorliegende Erfindung betrifft reaktive Strukturklebstoffe mit multiphasiger Polymermorphologie sowie deren Verwendung im Fahrzeugbau, Flugzeugbau oder Schienenfahrzeugbau.

Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Verklebungen mit hohen Anforderungen an die Festigkeit werden in großem Umfang hitzehärtbare hochfeste Reaktivklebstoffe (Strukturklebstoffe) eingesetzt, insbesondere als heißhärtende, einkomponentige Klebstoffe, die häufig auch als reaktive Schmelzklebstoffe formuliert werden. Reaktive Schmelzklebstoffe sind dabei Klebstoffe, die bei Raumtemperatur fest sind und bei Temperaturen bis zu etwa 80 bis 90°C erweichen und sich wie ein thermoplastisches Material verhalten. Erst bei höheren Temperaturen ab etwa 100°C werden die in diesen Schmelzklebstoffen vorhandenen latenten Härter thermisch aktiviert, so daß eine irreversible Aushärtung zu einem Duroplasten erfolgt. Zum Fügen der Bauteile, z. B. in der Fahrzeugindustrie, wird der Klebstoff zunächst warm auf mindestens eine Substratoberfläche aufgebracht, die zu verbindenden Bauteile werden dann gefügt. Beim Abkühlen erstarrt der Klebstoff dann und schafft durch dieses physikalische Erstarren eine ausreichende Handhabungsfestigkeit, d. h. eine vorläufige Verbindung. Die so miteinander verbundenen Bauteile werden in den verschiedenen Wasch-, Phosphatier- und Tauchlack-Bädern weiter behandelt. Erst anschließend wird der Klebstoff in einem Ofen bei höheren Temperaturen gehärtet.

Konventionelle hochfeste Reaktivklebstoffe sind im ausgehärtetem Zustand hart und spröde. Die mit ihnen erhaltenen Klebungen weisen zwar in aller Regel eine sehr hohe Zugscherfestigkeit auf. Bei schälender, schlagender oder schlagschälender Beanspruchung, insbesondere bei tiefen Temperaturen, dominiert das spröde Verhalten der hochvernetzten Polymere, so daß es bei dieser Beanspruchungsart der Klebefuge zum Bindungsverlust ohne wesentliche Energieabsorption kommt. Durch Herabsetzung der Glasübergangstemperatur und/oder der Vemetzungsdichte kann die Sprödigkeit des Materials verringert werden, was jedoch zwangsläufig zu einer Verringerung der Zugscherfestigkeit insbesondere bei hohen Temperaturen führt. Eine gängige Methode zur Schlagzähmodifizierung von hochfesten Reaktivklebstoffen ist die Erzeugung einer zweiphasigen Polymermorphologie mit einer mikroheterodispersen Phase eines thermoplastischen oder elastomeren Polymers mit niedriger Glasübergangstemperatur unter -20°C in einer kontinuierlichen Matrix eines Polymers mit einer hohen Glasübergangstemperatur über 100°C. Es liegen hierbei im allgemeinen diskrete sphärische Weichphasendomänen mit Durchmessern zwischen 0,1 und 10 µm homogen in der Matrix verteilt vor. Ein gängiges Verfahren zur Erzeugung solcher zweiphasigen Morphologien z.B. in Epoxidharzklebstoffen ist der Zusatz eines endgruppenmodifizierten, epoxidreaktiven Polybutadien-Co-Acrylnitril-Copolymers zum ungehärteten Epoxidharz. Dabei muß das thermoplastische Polymer im ungehärteten Epoxidharz löslich sein, im Verlauf der Härtungsreaktion jedoch mit dem Epoxidharz-Polymer unverträglich sein, so daß es während der Härtung zur Phasenseparation kommt. Mit Erreichen des Gelpunktes wird der Phasenseparationsprozeß gestoppt, so daß das thermoplastische bzw. elastomere Polymer in Form von mikroskopischen sphärischen Domänen in der Epoxidharzmatrix vorliegt. Ein anderes gängiges Verfahren zur Erzeugung derartiger Polymermorphologien ist die Verwendung von pulverförmigen Kern/Schalepolymeren, deren Primärpartikel im allgemeinen eine Größe zwischen 0,1 und 10 µm haben und deren Kernpolymer eine niedrige Glasübergangstemperatur unter -20°C aufweist. Man erhält so eine kontinuierliche Polymermatrix, in welcher mikroskopische, sphärische Weichphasendomänen vorliegen. Derartige Klebstoffzusammensetzungen enthalten im allgemeinen noch anorganische Füllstoffe und Rheologiehiffsmittel, die heterodispers in der Polymermatrix vorliegen, jedoch nicht wesentlich zur Schlagzähmodifizierung des Klebstoffes beitragen.

Die Energiedissipation in solchen zweiphasigen Polymeren erfolgt wesentlich durch plastische Verformung der harten Polymermatrix im Grenzflächenbereich zu den Mikroweichphasen durch lokale Spannungsspitzen und Kavitation um die Weichphasen. Die Schlagfestigkeit derartiger Polymere steigt im allgemeinen mit zunehmendem Volumenbruch der Weichphase. Der maximal erreichbare Anteil an Weichphase ist durch Phasenumkehr bzw. Verlust der mechanischen Festigkeit begrenzt. Der Einfluß der Weichphasendomänengröße auf die Schlagfestigkeit zweiphasiger Polymere ist nur gering und nicht einheitlich.

Obwohl z.B. Epoxidharz-Polymere derartiger Morphologien in bezug auf ihre Schlagfestigkeit bei vergleichbarer Zugscherfestigkeit bereits eine deutliche Verbesserung gegenüber den homogenen Epoxidharz-Polymeren darstellen, ist ihr Verhalten gegenüber schälenden bzw. schlagschälenden Beanspruchungen immer noch nicht ausreichend.

Eine modifizierte Polymermorphologie wurde von Buchholz und Mülhaupt beschrieben, siehe hierzu z.B.. R. Mülhaupt, U. Buchholz in "Toughened Plastics II"; Adv. Chem. Ser. 252, American Chemical Society, Washington, D.C., 1996, S. 75 - 94. Diese wurde durch Dicyandiamid-Härtung einer Mischung eines Epoxidharzes mit einem Liquid-Rubber-Blend aus einem Bisphenol-terminiertem Polyetherurethan und einem eopoxidterminierten Poly(butadien-co-acrylnitril) erzeugt. Es entsteht so eine kontinuierlichen Matrix eines Epoxidharzpolymers mit einer Glasübergangstemperatur von 80 bis 100°C, welche zweiphasigen Weichphasendomänen bestehend aus zwei verschiedenen thermoplastischen oder elastomeren Polymeren mit niedriger Glasübergangstemperatur und Durchmessern über 1 µm enthält. Diese Polymermorphologie weist keine weiteren im Transmissionselektronenmikroskop (TEM) sichtbaren diskreten Weichphasendomänen auf. Ein Teil eines thermoplastischen Polymers wird jedoch homogen in die Epoxidharzmatrix eingebaut, was zu einer Abnahme der Glasübergangstemperatur der Matrix führt. Dies führt zu einer Verringerung der Festigkeit bei hohen Temperaturen oberhalb 80°C.

Auch aus der EP-A-0 343 676 sind Schmelzklebstoffzusammensetzungen bekannt, die aus einem Gemisch von mehreren Epoxidharzen, einem phenolischen Harz sowie einem Polyurethan-Epoxidaddukt zusammengesetzt sind. Das darin enthaltene Polyurethan-Epoxidaddukt besteht aus einem Umsetzungsprodukt von mehreren Polyalkylenglycolhomo- und Copolymeren mit primären und sekundären OH-Gruppen, einem Diisocyanat und mindestens einem Epoxidharz. Es wird angegeben, daß diese Schmelzklebstoffzusammensetzung gegenüber verschiedenen, kommerziellen einkomponentigen Schmelzklebstoff zusammensetzungen in ihrer Scherfestigkeit, Schälfestigkeit und Schlagfestigkeit verbessert sind, über die Klebstoffeigenschaften der ausgehärteten Klebefuge bei tiefen Temperaturen werden keine Angaben gemacht.

Die US-A-5 290 857 beschreibt eine Epoxidharzklebstoffzusammensetzung enthaltend ein Epoxidharz sowie ein pulverförmiges Kem/Schalepolymer und einen wärmeaktivierbaren Härter für das Epoxidharz. Das pulverförmige Kem/Schalepolymer ist zusammengesetzt aus einem Kern enthaltend ein Acrylat- oder Methacrylatpolymer mit einer Glasübergangstemperatur von -30°C oder niedriger und einer Schale enthaltend ein Acrylat- oder Methacrylatpolymer, das vernetzende Monomereinheiten enthält und dessen Glasübergangstemperatur größer oder gleich 70°C ist, wobei das Gewichtsverhältnis des Kerns zur Schale im Bereich zwischen 10:1 bis 1:4 liegt. Es wird angegeben, daß diese Zusammensetzungen ausgezeichnete Klebstoffeigenschaften wie Schlagfestigkeit, Zugscherfestigkeit und T-Schälfestigkeit haben und außerdem eine gute partielle Gelierbarkeit besitzen. Angaben über die Eigenschaften von Verklebungen mit diesen Klebstoffen bei tiefen Temperaturen werden nicht gemacht.

In analoger Weise beschreibt die US-A-5 686 509 eine adhäsionsverstärkende Zusammensetzung für Epoxidharze bestehend aus pulverförmigen Copolymerteilchen, die ionisch mit einem mono- oder divalenten Metallkation vernetzt sind. Dabei ist der Kernbereich des Kem/Schalepolymers aus einem Dienmonomer und gegebenenfalls vernetzenden Monomereinheiten zusammengesetzt, der eine Glasübergangstemperatur kleiner oder gleich -30°C hat. Das Schalencopolymer hat eine Glasübergangstemperatur von mindestens 70°C und ist aus Acrylat- oder Methacrylatmonomereinheiten und radikalisch polymerisierbaren ungesättigten Carbonsäureeinheiten zusammengesetzt. Die Klebstoffzusammensetzung soll dabei auf 100 Teile Epoxidharz 15 bis 60 Gewichtsteile des adhäsionsverstärkenden Copolymerpulvers und 3 bis 30 Gewichtsteile eines hitzeaktivierbaren Härtungsagens haben. Diese Zusammensetzungen werden zur Anwendung als Strukturklebstoffe für Automobilteile empfohlen. Angaben über die Tieftemperatureigenschaften derartiger Verklebungen werden nicht gemacht.

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, daß diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rißfortpflanzungsbeständigkeit haben können.

In analoger Weise beschreibt die EP-A-0 353 190 Epoxidharz-Zusammensetzungen enthaltend ein Addukt aus einem Epoxidharz und einem carboxylierten Butadien-Acrylnitrilcopolymeren sowie ein Umsetzungsprodukt eines hydroxyl-, mercapto- oder aminoterminierten Polyalkylenglycols mit einer Phenolcarbonsäure mit nachfolgender Umsetzung der phenolischen Gruppe mit einem Epoxidharz. Der EP-A-0 353 190 ist zu entnehmen, daß diese Zusammensetzungen sich zur Herstellung von Klebstoffen, Klebefilmen, Patches, Dichtungsmassen, Lacken oder Matrixharzen eignet.

Die EP-A-338985 beschreibt modifizierte Epoxidharze, die ein flüssiges Copolymeres auf der Basis von Butadien, einem polaren, ethylenisch ungesättigten Comonomeren und ggf. weiteren ethylenisch ungesättigten Comonomeren enthalten und weiterhin ein Umsetzungsprodukt aus dihydroxyterminierten bzw. diaminoterminierten Polyalkylenglycolen und Diisocyanaten sowie einem Monophenol, einem Mercaptoalkohol oder einem aliphatischen Lactam. Gemäß der Lehre dieser Schrift lassen sich diese Zusammensetzungen zur Flexibilisierung von Epoxidharzen einsetzen. Zusätzlich zu den vorgenannten Bestandteilen sollen diese Zusammensetzungen noch Epoxidharze und einen Härter- bzw. Beschteuniger-enthatten. Derartige Gemische sollen sich als Klebstoffe, Klebefilme, Patches, Matrixharze, Lacke oder Dichtungsmassen verwenden.

Die EP-A-366157 beschreibt Epoxidharze enthaltend Polyester auf Polyalkylenglycolbasis und bei höheren Temperaturen wirksame Härter. Diese Zusammensetzungen enthalten mindestens eine Verbindung mit mindestens einer 1,2-Epoxidgruppe im Molekül sowie ein Umsetzungsprodukt eines aliphatischen oder cycloaliphatischen Diols mit einer aromatischen Hydroxycarbonsäure sowie einen bei höheren Temperaturen wirksamen Härter für die Epoxidgruppen-haltige Verbindung. Es wird ausgeführt, daß die gehärteten Epoxidharzmischungen eine sehr gute Tieftemperaturflexibilität und Korrosionsbeständigkeit aufweisen sollen. Über deren Eignung als Klebstoffe mit hoher Schälfestigkeit bei tiefen Temperaturen, insbesondere bei. schlagartiger Belastung, wird keine Aussage gemacht.

Die EP-A-272222 beschreibt Epoxidharze enthaltend Polyester auf Polyalkylenglycolbasis. Dabei leiten sich diese Polyester von aliphatischen, cycloaliphatischen oder aromatischen Carbonsäuren und/oder aromatischen Hydroxycarbonsäuren und aliphatischen oder cycloaliphatischen Diolen ab, wobei mindesten 70 Gew.% der Carbonsäurederivate sich von Dimer- und/oder Trimerfettsäuren ableiten. Es wird angegeben, daß derartige Epoxidharz-Zusammensetzungen für die Bereitstellung von hitzehärtbaren Klebstoffen zur Verklebung von Stahl- und Aluminium-Substraten geeignet sind. Die gehärteten Epoxidharzmischungen sollen eine gute Tieftemperaturflexibilität und Korrosionsbeständigkeit aufweisen.

Aus der EP-A-307666 sind wasserunlösliche Verbindungen bekannt, die im wesentlichen frei von Isocyanatgruppen sind und wenigstens zwei freie phenolische Hydroxylgruppen pro Molekül aufweisen und die erhältlich sind durch Umsetzung eines prepolymeren Polyisocyanats, welches ein Addukt eines Polyisocyanats an eine prepolymere Polyhydroxyl- oder Polysutfhydryl-Verbindung ist, oder sich von einem prepolymeren Polyetheramin ableitet. Dieses prepolymere Polyisocyanat wird mit mindestens einem Phenol mit zwei oder drei phenolischen Hydroxylgruppen oder einem Aminophenol mit ein oder zwei phenolischen Hydroxylgruppen umgesetzt. Diese Verbindungen werden dann mit Epoxidharzen und thermisch aktivierbaren Härtern versetzt um als Klebstoffe einsetzbar zu sein. Angaben über das Tieftemperaturverhalten, insbesondere bei schlagartiger Belastung sind dieser Schrift nicht zu entnehmen.

Die EP-A-381625 beschreibt härtbare Zusammensetzungen enthaltend ein Epoxidharz, einen bei erhöhter Temperatur aktivierbaren Härter, ein flüssiges Copolymer auf der Basis von Butadien, Acrylnitril und ggf. weiteren ethylenisch ungesättigten Comonomeren sowie ein segmentiertes Copolymeres bestehend im wesentlichen aus wiederkehrenden Weichsegmenten mit Polypropylenglycol- oder Polybutylenglycoleinheiten und ausgewählten Hartsegmenten mit einer Erweichungstemperatur von oberhalb 25°C. Gemäß der Lehre dieser Schrift werden die segmentierten Copolymeren aus Polyetherdiolen auf der Basis von Polypropylenglycol, Polytetramethylenglycol oder aminoterminierten Polyetherdiolen und gesättigten aliphatischen Dicarbonsäuren mit 4 bis 12 Kohlenstoffatomen oder aromatischen Dicarbonsäuren mit 8 bis 12 Kohlenstoffatomen aufgebaut und können weiterhin kurzkettige Diole oder Diamine in ihrem Hartsegment enthalten. Gemäß der Lehre dieser Schrift eignen sich diese Zusammensetzungen als Klebemittel, insbesondere als Schmelzkleber sowie als Matrixharze oder als Oberflächenbeschichtungsmittel. Festigkeiten, insbesondere Schälfestigkeiten bei schlagartiger Belastung und tiefer Temperatur werden nicht offenbart.

Gemäß der Lehre der EP-A-0 354 498 bzw. EP-A-0 591 307 lassen sich reaktive Schmelzklebstoffzusammensetzungen aus einer Harzkomponente, mindestens einem thermisch aktivierbaren latenten Härter für die Harzkomponente sowie gegebenenfalls Beschleuniger, Füllstoffe, Thixotropierhilfsmittel und weiteren üblichen Zusätzen herstellen, wobei die Harzkomponente durch die Umsetzung von einem bei Raumtemperatur festen Epoxidharz und einem bei Raumtemperatur flüssigen Epoxidharz mit einem oder mehreren linearen oder verzweigten Polyoxypropylen(en) mit Amino-Endgruppen erhältlich sind. Dabei sollen die Epoxidharze in einer solchen Menge, bezogen auf das Aminoterminierte Polyoxypropylen, eingesetzt werden, daß ein Überschuß an Epoxidgruppen bezogen auf die Aminogruppen gewährleistet ist. Diese Klebstoff-zusammensetzungen weisen bereits einen hohen Schälwiderstand im Winkelschälversuch auf, der auch bei tiefen Temperaturen erhalten bleibt.

Die DE-A-19845607 beschreibt Kondensationsprodukte aus Carbonsäuredianhydriden, Di- oder Polyaminen, insbesondere Polyoxyalkylenamiden und Polyphenolen oder Aminophenolen und deren Eignung als Aufbaukomponente für Epoxidharz-Zusammensetzungen. Derartig aufgebaute Zusammensetzungen enthalten zusätzlich Kautschuk-modifizierte Epoxidharze sowie flüssige und/oder feste Polyepoxide sowie übliche latente Härter und Beschleuniger und ggf. Füllstoffe. Sie eignen sich als schlagfeste, schlagschälfeste und schälfeste Klebstoffe im Fahrzeugbau. Obwohl diese Klebstoff-Zusammensetzungen insgesamt bereits ein sehr gutes Eigenschaftsspektrum auch bei tiefen Temperaturen haben, besteht weiterhin Bedarf an neuen und verbesserten Klebstoff-Zusammensetzungen für diese Anwendungsfelder.

Die PCT/EP01/03699 beschreibt Kondensationsprodukte aus cyclischen Carbonsäureanhydriden von Dicarbonsäuren, Tricarbonsäureanhydriden oder Tetracarbonsäureanhydriden und difunktionellen Polyaminen, insbesondere Polyoxyalkylenaminen, die sich als Aufbaukomponenten für Epoxid-Harzusammensetzungen eignen. Die Kondendationsprodukte auf Basis von Tricarbonsäureanhydriden oder Tetracarbonsäureanhydriden sollen sich durch im Mittel mehr als eine Imidgruppe und Carboxylgruppe pro Molekül auszeichnen. Ggf. können danach noch Kondensationsprodukte aus tri- oder mehrfunktionellen Polyolen und/oder tri- oder mehrfunktionellen aminoterminierten Polymeren und cyclischen Carbonsäureanhydriden in den Zusammensetzungen enthalten sein, wobei die letztgenannten Reaktionsprodukte im Mittel mehr als eine Carboxylgruppe pro Molekül enthalten sollen. Zusätzlich sollen diese Zusammensetzungen übliche kautschukmodifizierte Epoxidharze sowie flüssige und/oder feste Polyepoxidharze und übliche Härter und Beschleuniger und ggf. Füllstoffe und Rheologiehilfsmittel enthalten. Nach den Angaben dieser Schrift-eignen sich derartige Zusammensetzungen insbesondere als schlagfeste, schlagschälfeste und schälfeste Klebstoffe im Fahrzeugbau und in der Elektronik. Insbesondere bei sehr tiefen Temperaturen sollen diese Klebstoffe sehr gute Schlag- Schäl-Eigenschaften aufweisen.

Strukturklebstoffe mit multiphasiger Polymermorphologie werden im vorgenannten Stand der Technik nicht beschrieben.

Aufgabe der vorliegenden Erfindung ist es, die Morphologie gehärteter reaktiver Klebstoffe dahingehend weiter zu verbessern, daß sie eine ausreichende Flexibilität und Schälfestigkeit nicht nur bei Raumtemperatur sondern insbesondere auch bei tiefen Temperaturen unter 0°C aufweisen. Insbesondere soll die Schälfestigkeit bei tiefen Temperaturen und schlagartiger Belastung einen möglichst hohen Wert aufweisen, damit strukturell geklebte Bauteile auch im Falle eines Unfalls (Crash-Verhalten) den modernen Sicherheitsanforderungen im Fahrzeugbau entsprechen. Dabei soll die Polymermorphologie diese Verbesserungen ohne Beeinträchtigung der Schälfestigkeit und insbesondere der Zugscherfestigkeit bei hohen Temperaturen bis 120°C gewährleisten.

Die erfindungsgemäße Lösung der Aufgabe ist den Ansprüchen zu entnehmen. Sie besteht im Wesentlichen in der Bereitstellung eines hitzehärtbaren Strukturklebstoffes mit multiphasiger Polymermorphologie, wobei die Bindemittelmatrix des gehärteten Reaktionsklebstoffs eine kontinuierliche Phase bestehend aus einem, ggf. vernetzten, Polymer (P1) mit einer Glasübergangstemperatur oberhalb von 100° C, vorzugsweise 120° C, aufweist, in der eine heterodisperse Phase bestehend aus einzelnen kontinuierlichen Bereichen eines thermoplastischen oder elastomeren Polymeres P2 mit einer Glasübergangstemperatur von weniger als -30 °C und einer mittleren Teilchengröße zwischen 0,5 und 50 µm dispergiert ist.

Innerhalb dieser Phase, gebildet durch P2, ist ein weiteres thermoplastisches oder elastomeres Polymer P3 mit einer Glasübergangstemperatur von weniger als -30 °C mit mittleren Teilchengrößen zwischen 1 nm und 100 nm eindispergiert, die teilweise zu größeren Agglomeraten aggregiert vorliegen können. Weiterhin ist in der kontinuierlichen Phase P1 eine weitere heterodisperse Phase aus Bereichen des thermoplastischen oder elastomeren Polymers P3 mit einer Glasübergangstemperatur von weniger als -30 °C dispergiert, die zumindest teilweise eine mittlere Teilchengröße zwischen 1 nm und 50 nm haben, wobei P3 nicht identisch ist mit P2.

In einer bevorzugten Ausführungsform wird die kontinuierliche Phase des Polymers P1 durch ein Epoxidharz gebildet, daß durchschnittlich mehr als eine Epoxidgruppe pro Molekül ausweist. Das thermoplastische oder elastomere Polymer P2 ist dabei vorzugsweise ein Reaktionsprodukt herstellbar aus einem difunktionellen aminoterminierten Polymer und einem tri- oder Tetracarbonsäureanhydrid, wobei dieses Reaktionsprodukt im Mittel mehr als eine Imidgruppe und Carboxylgruppe pro Molekül aufweist. Vorzugsweise wird dieses Reaktionsprodukt anschließend mit einem Überschuß eines flüssigen Epoxidharzes umgesetzt. Weiterhin kann das Polymer P2 gebildet werden, durch ein Reaktionsprodukt, herstellbar aus einem tri- oder mehrfunktionellen Polyol oder einem tri- oder mehrfunktionellen aminoterminierten Polymer und einem cyclischen Carbonsäureanhydrid, wobei das Reaktionsprodukt im Mittel mehr als eine Carboxylgruppe pro Molekül enthält. Auch dieses Reaktionsprodukt wird vorzugsweise mit einem großen Überschuß eines flüssigen Epoxidharzes umgesetzt. Weiterhin kann das Polymer P2 gebildet werden, durch eine Mischung der beiden vorgenannten Reaktionsprodukte.

Das thermoplastische oder elastomere Polymere P3 ist ein Copolymeres auf Butadienbasis, es handelt sich um ein Umsetzungsprodukt eines carboxylgruppenhaltigen Copolymeren auf der Basis von Butadien-Acrylnitril, Butadien-(Meth)acrylsäureester, Butadien-Acrylnitril-Styrolcopolymer, Butadien-(Meth)-acrylat-Styrol/Copolymeren oder einem Dendrimeren mit einem flüssigen Epoxidharz.

Als Epoxidharze für die Kontinuierliche Phase des Polymers P1, sowie für die Epoxid-Adduktbildung bzw. zur Abmischung oder Umsetzung mit den thermoplastischen Polymeren P2 und P3, eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin (DGEBA oder DGEBF) ableiten. Dabei werden in der Regel Mischungen aus flüssigen und festen Epoxidharzen eingesetzt, wobei die flüssigen Epoxidharze vorzugsweise auf der Basis des -Bisphenols A-sind und ein hinreichend niedriges-Molekulargewicht aufweisen. Insbesondere für die Adduktbildung mit den Komponenten P2 und P3 werden bei Raumtemperatur flüssige Epoxidharze eingesetzt, die in der Regel ein EpoxidÄquivalentgewicht von 150 bis etwa 220 haben, besonders bevorzugt ist ein Epoxi-Äquivalentgewichtbereich von 182 bis 192.

Die für das Kondensationsprodukt P2 verwendeten difunktionellen aminoterminierten Polymeren können bevorzugt aminoterminierte Polyalkylenglycole, insbesondere die difunktionellen aminoterminierten Polypropylenglycole, Polyethylenglycole oder Copolymere von Propylenglycol und Ethylenglycol sein. Diese sind auch unter dem Namen "Jeffamine" (Handelsname der Firma Huntsman) bekannt. Weiterhin sind geeignet die difunktionellen aminoterminierten Polyoxytetramethylenglycole, auch Poly-THF genannt. Außerdem sind difunktionelle aminoterminierte Polybutadienverbindungen als Aufbaukomponenten geeignet sowie Aminobenzoesäureester von Polypropylenglycolen, Polyethylenglycolen oder Poly-THF (bekannt unter dem Handelsnamen "Versalink oligomeric Diamines" der Firma Air Products). Die aminoterminierten Polyalkylenglycole oder Polybutadiene haben Molekulargewichte zwischen 400 und 6000.

Werden die vorgenannten difunktionellen aminoterminierten Polymeren mit aliphatischen Tricarbonsäureanhydriden wie z.B. Citronensäureanhydrid, 1,2,3-Propantricarbonsäureanhydrid oder Aconitsäureanhydrid umgesetzt, so entstehen Imidstrukturen mit freien Carboxylgruppen am imidischen Ring.

Bei Umsetzung der aromatischen Tricarbonsäureanhydride bzw. Tetracarbonsäureanhydride entstehen Imidstrukturen mit freien Carboxylgruppen am aromatischenRing.

Beispiele für einzusetzende aromatische Tri- oder Tetracarbonsäureanhydride sind 1,2,3- oder 1,2,4-Benzoltricarbonsäureanhydrid, Mellophansäure-, Pyromellitsäure-, 1,8:4,5- bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzophenontetracarbonsäure-dianhydrid, Diphenylsulfontetracarbonsäure-dianhydrid oder deren Mischungen.

Für das Reaktionsprodukt P2 könne auch tri- oder mehrfunktionelle aminoterminierte Polymere verwendet werden, vorzugsweise werden Tri- oder Tetracarbonsäureanhydride als zweite Komponente eingesetzt, so daß cyclische Imidstrukturen entstehen. Bei der Verwendung von Carbonsäureanhydriden aus Dicarbonsäuren soll die Kondensationsreaktion so gelenkt werden, daß offenkettige Amidstrukturen mit freier Carboxylgruppe entstehen.

Konkrete Beispiele für Carbonsäureanhydride sind Maleinsäure-, Bemsteinsäure-, Citronensäure-, 1,2,3-Propantricarbonsäure-, Aconitsäure-, Phthalsäure-, 1,2,3-oder 1,2,4-Benzoltricarbonsäureanhydrid, Mellophansäure-, Pyromellitsäure-, 1,8:4,5- bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzolphenontetracarbonsäure-dianhydrid, Diphenylsulfontetracarbonsäure-dianhydrid oder deren Mischungen.

Beispiele für die Copolymeren der Aufbaukomponente P3 sind 1,3-Dienpolymere mit Carboxylgruppen und weiteren polaren, ethylenisch ungesättigten Comonomeren. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itaconsäure, Maleinsäure oder deren niedere Alkylester oder Halbester, oder Maleinsäure- oder Itaconsäureanhydrid, Vinylester wie beispielsweise Vinylacetat oder insbesondere Acrylnitril oder Methacrylnitril. Ganz besonders bevorzugte Copolymere A) sind Carboxyl-terminierte Butadienacrylnitrilcopolymere (CTBN), die in flüssiger Form unter dem Handelsnamen Hycar von der Firma B. F. Goodrich angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13 oder 1300X15.

Weiterhin können als Aufbaukomponente P3 auch die aus der US-A-5 290 857 bzw. aus der US-A-5 686 509 bekannten Kem/Schale-Polymeren eingesetzt werden. Dabei sollen die Kemmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei aus Copolymeren aufgebaut, die eine Glasübergangstemperatur von mindestens 60 °C hat. Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden,

Eine weitere Möglichkeit für die Aufbaukomponente P3 ist die Verwendung von Dendrimeren, diese werden auch als dendritische Polymere, Kaskadenpolymere oder "starburst"-Polymere bezeichnet. Sie werden bekanntlich schrittweise durch Verknüpfung von jeweils zwei oder mehreren Monomeren mit jedem bereits gebundenen Monomeren aufgebaut, so daß mit jedem Schritt die Zahl der Monomer-Endgruppen exponentiell anwächst und am Ende eine kugelförmige Baumstuktur entsteht. Derartige Dendrimere können z.B. durch Michael-Addition von Acrylsäuremethylester an Ammoniak oder Amine hergestellt werden.

Besonders bevorzugt für die Aufbaukomponente B) sind jedoch die Addukte aus Epoxidharzen und den vorgenannten flüssigen CTBN-Kautschuken.

Als thermisch aktivierbare oder latenter Härter für das Epoxidharz-Bindemittelsystem aus den Komponenten P1, P2 und P3 können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Heptamethylisobiguanidin und ganz besonders Cyanguanidin (Dicyandiamid). Als Vertreter für geeignete Guanamin-Derivate sein alkylierte Benzoguanamin-Harze, Benzoguanamin-Harze oder Methoximethyl-ethoxymethylbenzoguanamin genannt. Für die einkomponenten, hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylhamstoff (Monuron), 3-Phenyl-1,1-dimethylharnstoff (Fenuron) oder 3,4-Dichlorphenyl-N,N-dimethylhamstoff (Diuron). Prinzipiell können auch katalytisch wirksame tertiäre Aryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste, Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Klebstoffzusammensetzungen gängige weitere Hilfs- und Zusatzmittel wie z. B. Weichmacher, Reaktivverdünner, Rheologie-Hilfsmittel, Netzmittel, Alterungsschutzmittel, Stabilisatoren und/oder Farbpigmente enthalten.

Wie bereits eingangs erwähnt, steigen die Anforderungen an moderne Strukturklebstoffe im Fahrzeugbau ständig weiter an, da immer mehr Bauelemente auch tragender Natur durch Klebeverfahren gefügt werden. Wie bereits in dem Aufsatz von G. Kötting und S. Singh, "Anforderungen an Klebstoffe für Strukturverbindungen im Karosseriebau", Adhesion 1988, Heft 9, Seite 19 bis 26 ausgeführt, müssen die Klebstoffe zum einen praxisrelevante Aspekte der Fertigung erfüllen, hierzu gehören automatisierbare Verarbeitung in kurzen Taktzeiten, Haftung auf geölten Blechen, Haftung auf verschiedenen Blechsorten sowie Kompatibilität mit den Prozessbedingungen der Lackierstraße (Beständigkeit gegen Wasch- und Phosphatierbäder, härtbar während des Einbrennens der KTL-Grundierung, Beständigkeit gegenüber den nachfolgenden Lackier- und Trocknungsoperationen). Darüber hinaus müssen moderne Strukturklebstoffe auch im ausgehärteten Zustand steigende Festigkeits- und Verformungseigenschaften erfüllen. Hierzu gehören die hohe Korrosionsbeständigkeit oder Biegesteifigkeit der strukturellen Bauteile sowie die Verformbarkeit bei mechanischer Belastung der Verklebung. Eine möglichst hohe Verformbarkeit der Bauteile gewährleistet einen erheblichen Sicherheitsvorteil bei stoßartiger Belastung (Crash-Verhalten) bei einem Unfall. Dieses Verhalten läßt sich am besten durch die Ermittlung der Schlagarbeit für ausgehärtete Verklebungen ermitteln, hierbei sind sowohl bei hohen Temperaturen bis -90 °C als auch insbesondere bei tiefen Temperaturen bis zu -40 °C ausreichend hohe Werte für die Schlagarbeit bzw. Schlagschälarbeit wünschenswert bzw. erforderlich. Dabei soll zusätzlich eine möglichst hohe Zugscherfestigkeit erzielt werden. Beide Festigkeiten müssen auf einer Vielzahl von Substraten, hauptsächlich geölten Blechen, wie z. B. Karosseriestahlblech, nach den verschiedensten Methoden verzinktes Stahlblech, Blechen aus diversen Aluminiumlegierungen oder auch Magnesiumlegierungen sowie mit organischen Beschichtungen vom Typ "Bonazinc" oder "Granocoat" im Coil-Coating-Verfahren beschichteten Stahlbleche erzielt werden. Wie in den nachfolgenden Beispielen gezeigt werden wird, erfüllen die erfindungsgemäßen Klebstoffzusammensetzungen diese Anforderungen überraschender Weise in einem sehr hohen Ausmaß.

Die nachfolgenden Beispiele sollen die Erfindung näher erläutern. Bei den Zusammensetzungen sind dabei alle Mengenangaben Gewichtsteile, wenn nicht anders angegeben.

### Ausführungsbeispiel

### Herstellung von Polymer P2

3,1 Mol Maleinsäureanhydrid wurde unter Stickstoffatmosphäre und Rühren mit 1 Mol Jeffamine XTJ-509 (dreiwertiges aminoterminiertes Polypropylenoxid) bei 120°C für 120 min zur Reaktion gebracht. Das Reaktionsprodukt wird mit der 2,3-fachen Masse eines flüssigen DGEBA-Epoxidharzes und 0,25-Gew.-% Triphenylphosphin für 90 min bei 100°C umgesetzt.

### Herstellung von Polymer P3

Unter Stickstoffatmosphäre und Rühren wurden bei 140°C Hycar CTBN 1300 X13 (Carboxy-terminiertes Poly(butadien-co-acrylnitril)) mit einem etwa 10-fachen molaren Überschuß eines flüssigen DGEBA-Epoxidharzes 3 Stunden lang umgesetzt bis zur Konstanz der Reaktion. Das Produkt mit 40% Butylkautschuk weist ein Epoxyäquivalentgewicht von 900 und eine Viskosität von 200 Pa.s bei 80°C auf.

### Herstellung des Klebstoffs

In einem Kneter wurden 165g P2, 55g P3,- 2g DGEBA, 17,5g Dicyandiamid, 0,25g Fenuron und gegebenenfalls 10g Cabosil TS 720 bei 70°C bis zur Homogenität gemischt und anschließend warm in Lagerbehälter abgefüllt.

Der Klebstoff weist nach der Härtung (30 min bei 180°C) die erfindungsgemäße Morphologie auf, wie aus den Transmissionselektronenmikroskopischen (TEM) Aufnahmen ersichtlich ist

In der Tabelle sind die klebetechnischen Eigenschaften des erfindungsgemäßen Beispiels und die klebetechnischen Eigenschaften eines Klebstoffs gemäß Stand der Technik gegenübergestellt. Bei dem Klebstoff des Vergleichversuchs handelt es sich um Terokal 5051 der Firma Henkel Teroson. Dieser Klebstoff weist eine zweiphasige Morphologie mit einer mikroheterodispersen Phase eines elastomeren Polymers mit niedriger Glasübergangstemperatur unter -40°C in einer kontinuierlichen hochvernetzten Epoxidharzmatrix mit einer hohen Glasübergangstemperatur über 120°C auf. Es liegen hierbei diskrete sphärische Weichphasendomänen mit Durchmessern zwischen 0,5 und 2 µm homogen in der Matrix verteilt vor.

| **Beispiel** | **10** | **Vergl.** |
|---|---|---|
| Impact -40°C [J] | 14,3 | 0,5 |
| Impact -20°C [J] | 15,8 | 0,4 |
| Impact 0°C [J] | 17,7 | 0,9 |
| Impact 23°C [J] | 22,8 | 2,1 |
| ZSF 23°C [MPa] | 37 | 21,8 |
| ZSF 90°C [MPa] | 24 | 10,9 |

Das erfindungsgemäße Beispiel zeigen sehr hohe Schlagschälfestigkeit (Impact) nach ISO 11343 auch bei hohen Schlaggeschwindigkeften. Insbesondere wird dies durch hohe Schlagschälarbeitswerte bei den tiefen Temperaturen von -20 °C und - 40 °C deutlich. Gleichzeitig weisen diese Zusammensetzungen auch bei hohen Temperaturen von 90 °C eine hohe Zugscherfestigkeit (ZSF) nach DIN 53283 auf und sind in beiden Werten den Zusammensetzungen gemäß bisherigem Stand der Technik weit überlegen.

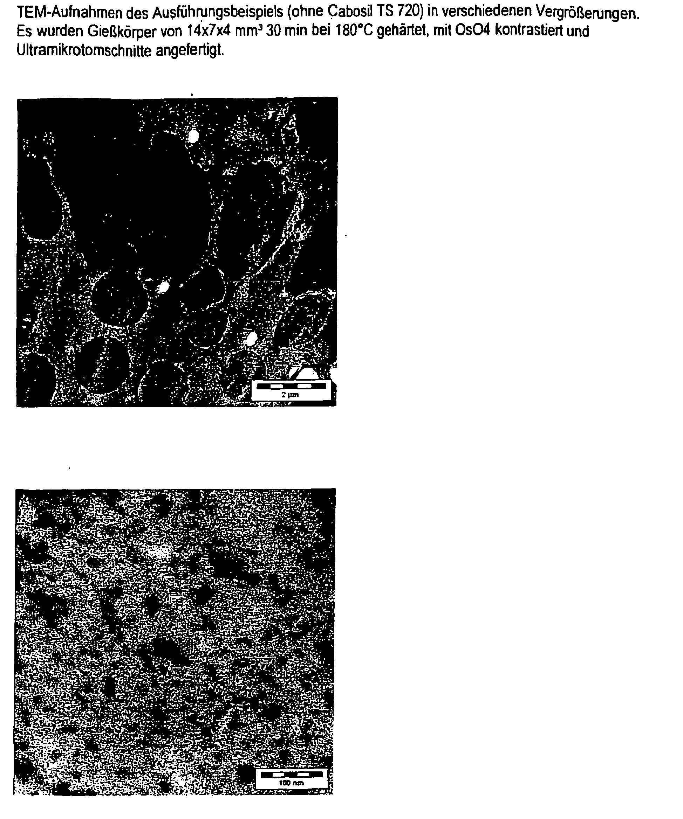

## Patentansprüche

1. Hitzehärtbarer Strukturklebstoff mit multiphasiger Polymermorphologie **dadurch** gekennenzeichnet, daß die Bindemittelmatrix des gehärteten Reaktionsklebstoffs
a) eine kontinuierliche Phase bestehend aus einem gegebenenfalls vernetztem Polymer P1 mit einer Glasübergangstemperatur oberhalb von 100 °C, vorzugsweise oberhalb von 120 °C,
b) eine heterodisperse Phase bestehend aus einzelnen kontinuierlichen Bereichen eines thermoplastischen oder elastomeren Polymeren P2 mit einer Glasübergangstemperatur von weniger als -30 °C und einer mittleren Teilchengröße zwischen 0,5 und 50 µm, welche ihrerseits separierte Phasen eines weiteren thermoplastischen oder elastomeren Polymeren P3 mit einer Glasübergangstemperatur von weniger als -30 °C und einer Größe zwischen 1 nm und 100nm enthält, die teilweise zu größeren Agglomeraten aggregiert vorliegen können, sowie
c) eine in der kontinuierlichen Phase eingebettete weitere heterodisperse Phase bestehend aus Bereichen eines thermoplastischen oder elastomeren Polymeren P3 mit einer Glasübergangstemperatur von weniger als -30 °C, die zumindest teilweise eine mittlere Teilchengröße zwischen 1 nm und 50 nm haben wobei P3 nicht identisch ist mit P2,.
aufweist.

2. Hitzehärtbarer Klebstoff nach Anspruch 1, **dadurch gekennzeichnet, daß** die kontinuierliche Phase des Polymers P1 durch ein Epoxidharz mit durchschnittlich mehr als einer Epoxidgruppe pro Molekül gebildet wird.

3. Hitzehärtbarer Klebstoff nach Anspruch 1 oder 2, **dadurch gekennzeichnet, daß** das Polymer P2
a) ein Reaktionsprodukt herstellbar aus einem difunktionellen aminoterminierten Polymer und einem Tri- oder Tetracarbonsäureanhydrid, **gekennzeichnet durch** im Mittel mehr als eine Imidgruppe und Carboxylgruppe pro Molekül, oder
b) ein Reaktionsprodukt herstellbar aus einem tri- oder mehrfunktionellen Polyol oder einem tri- oder mehrfunktionellen aminoterminierten Polymer und einem cyclischen Carbonsäurehydrid, wobei das Reaktionsprodukt im Mittel mehr als eine Carboxylgruppe pro Molekül enthält, oder
c) eine Mischung der Reaktionsprodukte gemäß (a) und (b) ist,
das anschließend mit einem Überschuß eines Epoxidharzes umgesetzt wird.

4. Hitzehärtbarer Klebstoff nach Anspruch 1 oder 2 **dadurch gekennzeichnet, daß** das Polymer P3 ein Copolymeres auf Butadienbasis ist.

5. Hitzehärtbarer Klebstoff nach Anspruch 4, **dadurch gekennzeichnet, daß** das Copolymer ein carboxylgruppenhaltiges Copolymer auf der Basis von Butadien-Acrylnitril, Butadien-(Meth)acrylsäureester, ein Butadien-Acrylnitril-Styrol-Copolymeres, ein Butadien-(Meth)acrylat-Styrol-Copolymeres oder ein Dendrimeres ist.

6. Verwendung der Zusammensetzungen nach mindestens einem der vorhergehenden Ansprüche als hochfester, schlagfester Strukturklebstoff im Fahrzeugbau, Flugzeugbau oder Schienenfahrzeugbau.

7. Verwendung gemäß Anspruch 6 als Strukturschaum zur Bildung von Innenversteifungen von Hohlräumen im Fahrzeugbau sowie zur Herstellung von versteifenden Beschichtungen für dünnwandige Bleche oder Kunststoffbauteile

8. Verwendung gemäß Anspruch 6 zur Herstellung von Verbundwerkstoffen, als Vergussmassen in der Elektro- bzw. Elektronikindustrie sowie als Die-Attach-Klebstoff bei der Herstellung von Leiterplatten in der Elektronikindustrie.

9. Verfahren zum Verkleben von metallischen und/oder Verbundwerkstoffen, **gekennzeichnet durch** die folgenden wesentlichen Verfahrensschritte
(a) Aufbringen der Klebstoffzusammensetzung gemäß Anspruch 1 bis 5 auf mindestens eine der zu fügenden Substratoberflächen gegebenenfalls nach vorheriger Reinigung und/oder Oberflächenbehandlung,
(b) Fügen der Bauteile,
(c) Gegebenenfalls Vorgelieren der Klebstoffzusammensetzung,
(d) Aushärten der Verklebung **durch** Erwärmen der Bauteile auf Temperaturen zwischen 80°C und 210°C, vorzugsweise zwischen 120°C und 180°C.

## Claims

1. A hot-curing structural adhesive with multiphase polymer morphology, wherein the binder matrix of the cured chemically reactive adhesive displays
a) a continuous phase consisting of an optionally crosslinked polymer P1 having a glass transition temperature of over 100°C, preferably over 120°C,
b) a heterodisperse phase consisting of individual continuous domains of a thermoplastic or elastomeric polymer P2 having a glass transition temperature of below -30°C and an average particle size of between 0.5 and 50 µm, which itself contains separate phases of another thermoplastic or elastomeric polymer P3 having a glass transition temperature of below -30°C and a size of between 1 nm and 100 nm, parts of which can be in aggregated form as larger agglomerates, and
c) another heterodisperse phase embedded in the continuous phase and consisting of domains of a thermoplastic or elastomeric polymer P3 having a glass transition temperature of below -30°C, at least parts of which have an average particle size of between 1 nm and 50 nm, wherein P3 is not identical to P2.

2. The hot-curing adhesive as claimed in claim 1, wherein the continuous phase of the polymer P1 is formed from an epoxy resin having on average more than one epoxy group per molecule.

3. The hot-curing adhesive as claimed in claim 1 or 2, wherein the polymer P2 is
a) a reaction product that can be produced from a difunctional amino-terminated polymer and a tricarboxylic or tetracarboxylic anhydride, wherein there is on average more than one imide group and carboxyl group per molecule, or
b) a reaction product that can be produced from a trifunctional or polyfunctional polyol or a trifunctional or polyfunctional amino-terminated polymer and a cyclic carboxylic anhydride, wherein the reaction product contains on average more than one carboxyl group per molecule, or
c) a mixture of the reaction products according to (a) and (b),
which is subsequently reacted with an excess of an epoxy resin.

4. The hot-curing adhesive as claimed in claim 1 or 2, wherein the polymer P3 is a butadiene-based copolymer.

5. The hot-curing adhesive as claimed in claim 4, wherein the copolymer is a carboxyl group-containing copolymer based on butadiene acrylonitrile, butadiene (meth)acrylic acid ester, a butadiene acrylonitrile styrene copolymer, a butadiene (meth)acrylate styrene copolymer or a dendrimer.

6. A use of the compositions as claimed in at least one of the preceding claims as a high-strength, impact resistant structural adhesive in automobile construction, aircraft construction or rail vehicle construction.

7. The use as claimed in claim 6 as a structural foam for the formation of internal stiffeners for cavities in automobile construction and for the production of reinforcing coatings for thin-wall sheet metals or plastic components.

8. The use as claimed in claim 6 for the production of composite materials, as embedding compositions in the electrical or electronics industry and as a die attach adhesive in the production of printed circuit boards in the electronics industry.

9. A process for bonding metallic and/or composite materials, wherein there are the following substantial process steps
(a) application of the adhesive composition according to claim 1 to 5 onto at least one of the substrate surfaces to be joined, optionally after prior cleaning and/or surface treatment,
(b) joining together of the components,
(c) optional pre-gelling of the adhesive composition,
(d) curing of the bonded joint by heating the components at temperatures of between 80°C and 210°C, preferably between 120°C and 180°C.

## Revendications

1. Adhésif de structure thermodurcissable ayant une morphologie polymère à phases multiples, **caractérisé en ce que** la matrice de liant de l'adhésif réactionnel durci comprend
a) une phase continue constituée d'un polymère éventuellement réticulé P1 qui présente une température de transition vitreuse supérieure à 100°C, de préférence supérieure à 120°C,
b) une phase hétérodispersée constituée de zones séparées continues d'un polymère thermoplastique ou élastomère P2 qui présente une température de transition vitreuse inférieure à -30°C et une taille moyenne des particules comprise entre 0,5 et 50*µ*m, qui, de son côté, contient des phases séparées d'un autre polymère thermoplastique ou élastomère P3 présentant une température de transition vitreuse inférieure à -30°C et une dimension comprise entre 1 nm et 100 nm, phases qui peuvent partiellement s'agréger en agglomérats de plus grande dimension, et
c) une autre phase hétérodispersée incluse dans la phase continue constituée de zones d'un polymère thermoplastique ou élastomère P3 présentant une température de transition vitreuse inférieure à -30°C, zones qui présentent au moins en partie une taille moyenne des particules comprise entre 1 nm et 50 nm, P3 n'étant pas identique à P2.

2. Adhésif de structure thermodurcissable selon la revendication 1, **caractérisé en ce que** la phase continue du polymère P1 est formée par une résine époxyde ayant en moyenne plus d'un groupe époxyde par molécule.

3. Adhésif de structure thermodurcissable selon la revendication 1 ou 2, **caractérisé en ce que** le polymère P2 est constitué par
a) un produit réactionnel pouvant être obtenu à partir d'un polymère difonctionnel à terminaison amino et d'un anhydride d'acide tri- ou tétracarboxylique, **caractérisé par**, en moyenne, plus d'un groupe imide et plus d'un groupe carboxyle par molécule, ou
b) un produit réactionnel pouvant être obtenu à partir d'un polyol tri- ou multifonctionnel ou d'un polymère tri- ou multifonctionnel à terminaison amino et d'un anhydride d'acide carboxylique cyclique, le produit réactionnel comprenant, en moyenne, plus d'un groupe carboxyle par molécule, ou
c) un mélange des produits réactionnels selon (a) et (b),
qui est mis à réagir ensuite avec une quantité en excès d'une résine époxyde.

4. Adhésif de structure thermodurcissable selon la revendication 1 ou 2, **caractérisé en ce que** le polymère P3 est un copolymère à base de butadiène.

5. Adhésif de structure thermodurcissable selon la revendication 4, **caractérisé en ce que** le copolymère est un copolymère carboxylé à base de butadiène-acrylonitrile, de butadiène-ester d'acide (méth)acrylique, d'un copolymère butadiène-acrylonitrile-styrène, d'un copolymère butadiène-(méth)acrylate-styrène ou d'un dendrimère.

6. Utilisation de compositions selon au moins l'une des revendications précédentes, en tant qu'adhésif de structure très solide, résistant au choc, dans la construction d'automobiles, d'avions ou de véhicules sur rails.

7. Utilisation selon la revendication 6 comme mousse de structure pour la formation de nervures internes à l'intérieur d'espaces creux dans des véhicules et pour la fabrication de revêtements renforçateurs pour des plaques métalliques minces ou des pièces en matière plastique.

8. Utilisation selon la revendication 6 pour la préparation de matériaux composites sous forme de masse à couler dans l'industrie électrique ou électronique et sous forme d'adhésif de fixation dans la fabrication de plaques conductrices pour l'industrie électronique.

9. Procédé de collage de matériaux métalliques et/ou de matériaux composites, **caractérisé par** les étapes essentielles suivantes :
(a) application de la composition adhésive selon l'une quelconque des revendications 1 à 5 sur au moins une des faces des substrats à assembler, le cas échéant après nettoyage et/ou traitement de surface préalable,
(b) assemblage des pièces,
(c) éventuellement gélification préalable de la composition adhésive,
(d) durcissement du collage par chauffage des pièces à une température comprise entre 80°C et 210°C, de préférence entre 120°C et 180°C.
